# EUROPEAN PATENT APPLICATION

(11) **EP 1 458 185 A1**
(43) Date of publication of application: **15.09.2004**
(21) Application number: 04005437.1
(22) Date of filing: 08.03.2004
(51) Int. Cl.: H04N 5/63

(54) **Power controller of combined electronic equipment**

(30) Priority: 14.03.2003 JP 2003069673
(71) Applicant: ORION ELECTRIC CO., Ltd., Takefu-City, Fukui 915-8555 (JP)
(72) Inventor: Okumura, Yoshihiro, Takefu-city, Fukui 915-8555 (JP)
(74) Representative: Goddar, Heinz J., Dr.

(57) **Abstract**

An object of the invention is to provide a power supply controller for stopping an output of a power supply portion without adding a new circuit in the combined electronic equipment, and dispensing with ON/OFF operation of a power supply each time for every electronic equipment. The supply of power is controlled by supplying a control signal from a body CPU 10 to voltage conversion circuits (31, 32, 33) for supplying voltages having different levels to corresponding functional blocks (1, 2, 3), and the voltage conversion circuit for supplying a voltage having a level corresponding to a non-used functional block is controlled to be turned OFF, thereby reducing power consumption.

## Description

### BACKGROUND OF THE INVENTION

### 1. Field of the Invention:

The invention relates to a power supply controller of a combined electronic equipment formed by integrally combining equipment with one another such as TVs (televisions), VCRs (Video Cassette Recorders), DVDs (Digital Versatile Discs including its recording/reproducing unit), HDDs (Hard Disk Drivea) and so forth.

### 2. Description of Related Art:

Electronic equipment formed by integrally combining electronic equipment associated with image information with one another such as TVs, VCRs, DVDs, HDDs and so forth has recently come into practical use. By integrally combining the electronic equipment with one another, electronic equipment per se can be made downsized compared with a case where each electronic equipment is provided as a single unit, thereby attaining a merit capable of transmitting information at a high speed between the electronic equipment, but there is a case where power is supplied to the electronic equipment such as DVDs and so forth which are not used even when only TVs and VCRs are used, which causes a problem that useless power consumption is needed by that amount.

Accordingly, there is considered that a power supply of each equipment is operated, for example, by remote control, to be turned ON or OFF, which however needs the installation of power supplies separately and manual operations each time. It is also considered that a power supply is shared by each equipment to shutoff the supply of power to each electronic equipment. For example, Patent Reference 1 of JP-A 10-200050 discloses that a switch is disposed on a power main line of a circuit block, and the switch is open-circuited in response to a shut-off instruction signal from other circuit block, to shut off the supply of power to the circuit block. Further, Patent Reference 2 of JP-A 2001-77487 discloses that a circuit provided on a printed board is configured such that it is divided into a plurality of blocks to which power is supplied independently, and a power supply control means is provided on a first block of a plurality of blocks to which power is supplied from an external device for deciding the supply or the shut-off of the supply of power to other blocks.

However, according to the foregoing prior art technical references, an output of the power supply per se is the same as in the past while a power supply line to a circuit block is shut off, and hence the output of the power supply portion is not stopped, thereby generating useless power consumption by that amount. Further, it is necessary to add a new circuit configuration such as switches and so forth for shutting off the power supply, thereby increasing cost thereof by that amount.

### SUMMARY OP THE INVENTION

Accordingly, it is an object of the invention to provide a power supply controller for stopping an output of a power supply portion without adding a new circuit in the combined electronic equipment as set forth above, and dispensing with ON/OFF operation of a power supply each time for every electronic equipment.

The power supply controller of a combined electronic equipment of the invention comprises a power supply portion for supplying voltages having a plurality of different levels to a plurality of functional blocks to which power is independently supplied, and a control portion for controlling the power supply portion, characterized in that the control portion comprises deciding means for deciding as to whether operation of any of the functional blocks is selected, and control means for controlling the power supply portion for stopping the supply of a voltage having a level corresponding to the non-selected functional block in response to the result of decision. Further, the control portion is characterized in that it is one of the functional blocks. Still further, the decision means is characterized in that it makes decision by selection information based on selecting operation by an operator.

With the arrangement set forth above, since the supply of voltage, which has a level to be supplied to a non-selected functional block among voltages having different levels to be supplied from the power supply portion, is stopped, the supply of power to the functional block can be stopped without particularly adding a circuit configuration for stopping the supply of power. For example, in the case where a voltage V1 is supplied from the power supply portion to a VCR while power of voltage V2 (≠V1) is supplied to a DVD, if the supply of the voltage V2 of the power supply portion is stopped when the operation of the VCR is selected, power consumption is not needed at the DVD, and hence the supply of the voltage V2 from the power supply portion is not needed, thereby reducing the power consumption by that amount. Since the stop of supply of power is effected based on the selection of operation of the functional blocks, the conventional selection of operation is sufficient, thereby dispensing with the operation each time for stopping the supply of power.

Aiming at the supply of power having a plurality of different levels to the functional blocks for every functional block in the combined electronic equipment, the stop of supply of power is controlled, thereby surely holding down useless power consumption with a simple configuration.

Further, if one of the plurality of functional blocks effects the control of the power supply portion, the addition of a new circuit configuration for effecting the control is dispensed with. Further, if decision is made based on selecting operation by an operator, it becomes possible for the operator to set the supply of power in advance in conformity to availability.

### BRIEF DESCRIPTION OF THE DRAWINGS

Fig. 1 is a schematic block diagram of a combined electronic equipment provided with an embodiment of the invention;
Fig. 2 is a view for explaining a processing flow of the embodiment of the invention; and
Fig. 3 is a view for explaining another processing flow of the embodiment of the invention.

### PREFERRED EMBODIMENT OF THE INVENTION

The embodiment of the invention is now described in detail. Since the embodiment set forth hereunder is preferable concrete example to carry out the invention, they are technically restricted variously but the invention is not limited to the embodiment unless specifically describing that the invention is limited.

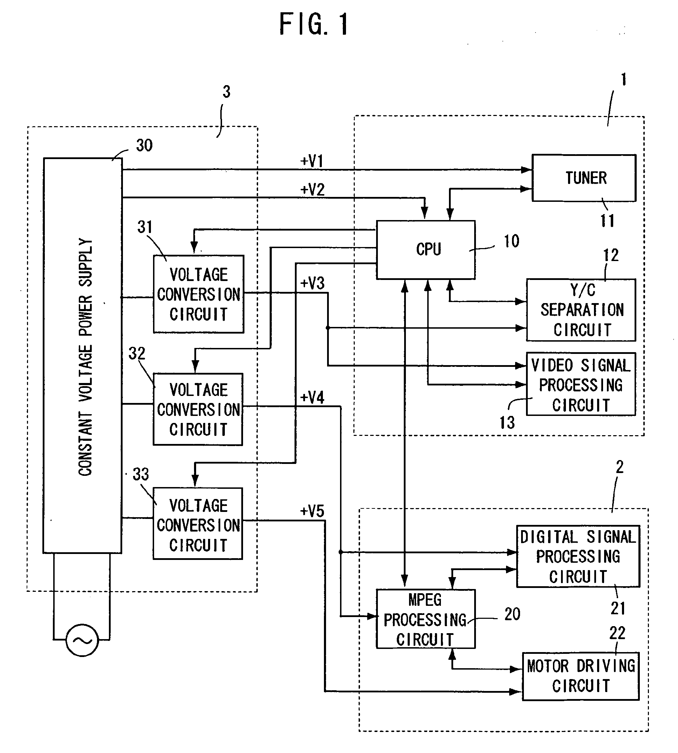

Fig. 1 is a schematic block diagram of a combined electronic equipment of a TV, a VCR and a DVD provided with the embodiment of the invention. This block diagram shows a portion of a circuit to which power is supplied so as to facilitate the understanding of the invention. Depicted by 1 surrounded by the dotted line is a block relating to a TV and a VCR, by 2 surrounded by the dotted line is a block relating to a DVD. Depicted by 3 surrounded by the dotted line is a power supply portion for supplying power to these blocks.

Provided in the block 1 are circuits corresponding to functional blocks such as a body CPU 10 for controlling an entire combined electronic equipment, a tuner 11 for receiving a television broadcasting signal, a Y/C separation circuit 12 for separating a composite video signal into a Y signal (luminance) and a C signal (color), a video signal processing circuit 13 for recording and reproducing in a video cassette, and so forth.

Provided in the block 2 are circuits corresponding to functional blocks such as an MPEG processing circuit 20 for decoding and coding to an MPEG format, a digital signal processing circuit 21 for processing digital data which is recorded and reproduced in a DVD, a motor driving circuit 22 for rotatably driving an optical disc, and so forth.

Provided in a power supply portion 3 are a constant voltage power supply 30 for outputting and supplying constant voltages +V1 and +V2 from a commercial power supply, a voltage conversion circuit 31 for converting the voltage from the constant voltage power supply 30 into a voltage +V3 to output and supply it, a voltage conversion circuit 32 for converting the voltage from the constant voltage power supply 30 into a voltage +V4 to output and supply it, and a voltage conversion circuit 33 for converting the voltage from the constant voltage power supply 30 into a voltage +V5 to output and supply it. The voltages +V1 to +V5 are set at different values in conformity to the voltages of the circuits of the functional blocks.

The different set voltages +V1 to +V5 can be supplied to the corresponding circuits by connecting the constant voltage power supply 30 to the tuner 11, and the body CPU 10, and connecting the voltage conversion circuit 31 to the Y/C separation circuit 12 and the video signal processing circuit 13, and connecting the voltage conversion circuit 32 to the MPEG processing circuit 20 and the digital signal processing circuit 21, and connecting the voltage conversion circuit 33 to the motor driving circuit 22.

The voltage conversion circuits 31, 32, 33 have input terminals, respectively, to which a control signal is inputted from the body CPU 10, and they are configured that the supply of voltage is controlled in response to the control signal.

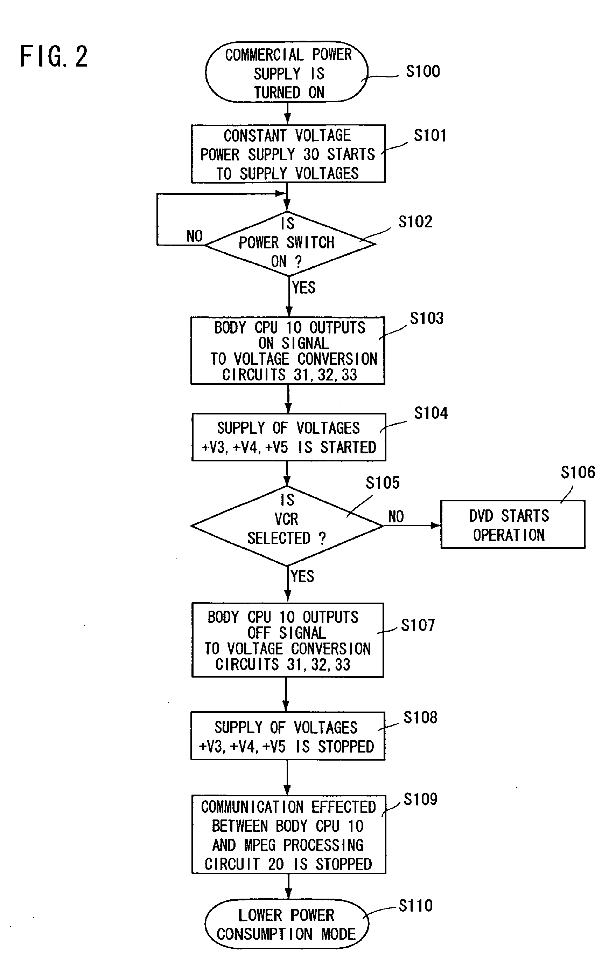

A processing flow of an embodiment is now described with reference to Fig. 2. When the combined electronic equipment is connected to a commercial power supply (S100), the constant voltage power supply 30 is activated to supply the voltages +1V and +V2 to the tuner 11 and the body CPU 10, and rendered in a standby state (S101). If an operator turns ON a power switch (S102), the body CPU 10 outputs the control signal for allowing the voltage conversion circuits 31, 32, 33 to turn ON (S103), so that the voltages +V3, +V4, +V5 are outputted and supplied from the voltage conversion circuits 31, 32, 33 (S104). Accordingly, the Y/C separation circuit 12, the video signal processing circuit 13, the MPEG processing circuit 20, the digital signal processing circuit 21, the motor driving circuit 22 are rendered in a standby state, respectively.

Then, it is checked as to whether an operator selects the VCR or not (S105), and if the VCR is not selected but the DVD is selected, the DVD starts operation (S106). If the body CPU 10 detects that the VCR is selected, a control signal for turning OFF the voltage conversion circuits 32 and 33 is outputted (S107) so that the output of the voltages +V4, +V5 from the voltage conversion circuits 32 and 33 is stopped (S108). Accordingly, the MPEG processing circuit 20, the digital signal processing circuit 21 and the motor driving circuit 22 are rendered in an operation stop state. In this state, a bus communication effected between the body CPU 10 and the MPEG processing circuit 20 is also stopped to be rendered in a low power consumption mode.

In this embodiment set forth above, although the selection of the VCR is detected based on the selecting operation of the VCR by the operator (for example, operation of mode switching button by a remote control), it may be configured that if the operator selects the low power consumption mode in advance, the supply of voltage to the non-used functional block may be automatically stopped. As a method of selecting the low power consumption by the operator, it may be configured that a normal mode and an automatic low power consumption mode may be selected, for example, on a menu screen. It may be sufficient that the low power consumption is selected by a method other than the foregoing method.

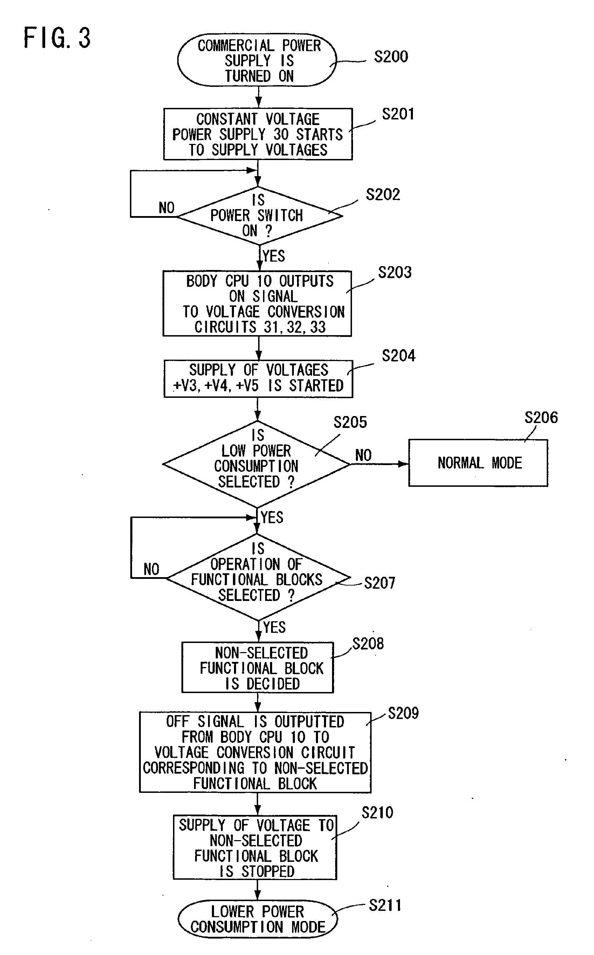

Another processing flow of the embodiment is described with reference to Fig. 3. If the combined electronic equipment is connected to a commercial power supply (S200), the constant voltage power supply 30 is activated to supply the voltages +V1 and +V2 to the tuner 11 and the body CPU 10 (S201). If the power switch is turned ON (S202), the body CPU 10 outputs a control signal for turning ON the voltage conversion circuits 31, 32 and 33 (S203), and the voltages +V3, +V4 and +V5 are respectively outputted and supplied from the voltage conversion circuits 31, 32, and 33 (S204). Accordingly, the Y/C separation circuit 12, the video signal processing circuit 13, the MPEG processing circuit 20, the digital signal processing circuit 21 and the motor driving circuit 22 are rendered in a standby state.

Then, the body CPU 10 checks as to whether the automatic low power consumption is selected or not (S205). Assuming that it is selected in advance as to whether it is the normal mode or the automatic low power consumption mode. If the automatic low power consumption mode is not selected, it is rendered in a standby state as the normal mode (S206).

If the automatic low power consumption mode is selected, the body CPU 10 checks as to where operation of either of the functional blocks (DVD and VCR in this embodiment) is selected (S207). The check of the selection of operation of the functional blocks can be effected by checking a switching control signal supplied to a switching circuit for switching the input of an image signal and a sound signal of the DVD and the VCR to output it. It is decided as to whether which is the non-selected functional block if there is an operational selection (S208), and the body CPU 10 outputs a control signal for turning OFF the voltage conversion circuit for supplying a voltage having a level corresponding to the non-selected functional block (S209). Accordingly, the voltage is not supplied to the non-selected functional block to render it in an operation stop state (S210), resulting in the low power consumption mode (S211). If the selection of operation is changed in the low power consumption mode, the processing flow ranging from S207 to S210 is executed to stop the supply of voltage to the functional block which is not always used, thereby reducing the power consumption. The features disclosed in the foregoing description, in the claims and/or in the accompanying drawings may, both separately and in any combination thereof, be material for realising the invention in diverse forms thereof.

## Claims

1. A power supply controller of a combined electronic equipment comprising:
a power supply portion (30) for supplying voltages having a plurality of different levels to a plurality of functional blocks (1, 2, 3) to which power is independently supplied; and
a control portion for controlling the power supply portion (30);
wherein said control portion comprises deciding means for deciding as to whether operation of any of the functional blocks (1, 2, 3) is selected, and control means for controlling said power supply portion (30) for stopping the supply of a voltage having a level corresponding to the non-selected functional block in response to the result of decision.

2. The power supply controller of the combined electronic equipment according to Claim 1, wherein the control portion is one of the functional blocks (1, 2, 3).

3. The power supply controller of the combined electronic equipment according to Claim 1 or 2, wherein the decision means makes decision by selection information based on selecting operation by an operator.
